# EUROPEAN PATENT APPLICATION

(11) **EP 3 690 662 A1**
(43) Date of publication of application: **05.08.2020**
(21) Application number: 18861911.8
(22) Date of filing: 27.09.2018
(51) Int. Cl.: G06F 13/14, G05B 19/04

(54) **METHOD, DEVICE, AND PROGRAM FOR PROCESSING SIGNALS**

(30) Priority: 29.09.2017 KR 20170128316
(71) Applicant: Hanwha Precision Machinery Co., Ltd., Changwon-si, Gyeongsangnam-do 51552 (KR)
(72) Inventor: LEE, Jin Jae, Changwon-si Gyeongsangnam-do 51542 (KR); LEE, Byung Hoon, Changwon-si Gyeongsangnam-do 51542 (KR); KIM, Jin Soo, Changwon-si Gyeongsangnam-do 51542 (KR)
(74) Representative: Gulde & Partner
(86) International application number: PCT/KR2018/011454
(87) International publication number: WO 2019/066506

(57) **Abstract**

A method of processing N or more control signals using N (N is a natural number) ports of a robot control device may include defining an N-bit signal frame composed of a logic signal of each of the N ports; generating a port setting bit for determining whether to use each of the N ports by referring to an order of ports according to the signal frame; generating a result bit by performing a bit operation on a logic signal of each of the N ports and the port setting bit according to the signal frame; and processing a signal based on the result bit.

## Description

### TECHNICAL FIELD

Embodiments of the present invention relate to a signal processing method, device, and computer program.

### BACKGROUND ART

With the rapid development of technology, robots play an important role as tools for performing various tasks instead of humans. Robots are used primarily for the automation of many types of tasks such as logistics, assembly, welding, painting, and so on in manufacturing production lines, instead of human arms, thereby contributing to increased productivity.

In order to perform the operation according to the purpose, such a robot exchanges signals with an external device through an input/output port, and the number of such ports is generally limited due to the physical size of a robot control device.

Therefore, if the number of data transmission/reception channels, which is more than the number of ports included in a robot control device, is required, the robot control device itself was changed to another robot control device with more ports, or a separate extension module was used in linkage with the robot control device.

However, the change of a robot control device or the use of a separate extension module not only increases the operating cost of a system and but also increases the complexity of the system, and causes considerable losses by consuming time for the reorganization of the system.

### DESCRIPTION OF EMBODIMENTS

### TECHNICAL PROBLEM

The present invention is to solve the above problems and is to provide a signal processing method, device, and computer program capable of processing a large amount of signals even with a limited number of ports by combining a plurality of channels organically without changing a robot control device or using a separate extension module if the number of data transmission/reception channels, which is more than the number of ports included in the robot control device, is required.

In particular, the present invention is to provide a signal processing method, device, and computer program that can process signals of more than the number of ports by merging the logic signals of a plurality of ports in parallel.

In addition, the present invention is to provide a signal processing method, device, and computer program that merge and use the logic signals of a plurality of ports in parallel, simultaneously process signals of more than the number of ports, increase the usability of unused ports, and furthermore, enable the port to be used more efficiently.

### SOLUTION TO PROBLEM

A method of processing N or more control signals using N (N is a natural number) ports of a robot control device according to an embodiment of the present invention may include defining an N-bit signal frame composed of a logic signal of each of the N ports; generating a port setting bit for determining whether to use each of the N ports by referring to an order of ports according to the signal frame; generating a result bit by performing a bit operation on a logic signal of each of the N ports and the port setting bit according to the signal frame; and processing a signal based on the result bit.

The generating of the port setting bit may include generating a port setting bit corresponding to a used port among the N ports as 1, and generating a port setting bit corresponding to an unused port among the N ports as 0.

When the number of ports used among the N ports is U (N>=U, U is a natural number), the result bit may be 2 to the power of U.

The signal processing method may further include, after the processing of the signal, processing a signal for an unused port among the N ports.

The processing of the signal for the unused port may include separately processing each of the unused port regardless of the signal frame and the port setting bit.

The unused port may be in a plurality, and when following the order of ports according to the signal frame, the plurality of unused ports may not be adjacent to each other.

The processing of the signal may be generating of an output signal, and the generating of the result bit may include generating an output signal bit by performing a bit operation on a logic signal of each of the N ports generated internally and the port setting bit.

The processing of the signal may be obtaining of an input signal, and the generating of the result bit may include generating an input signal bit by performing a bit operation on a logic signal of each of the N ports obtained from an external device and the port setting bit.

A robot control device for processing N or more control signals using N (N is a natural number) ports according to an embodiment of the present invention includes a control unit, and the control unit may define an N-bit signal frame composed of a logic signal of each of the N ports, generate a port setting bit for determining whether to use each of the N ports by referring to an order of ports according to the signal frame, generate a result bit by performing a bit operation on a logic signal of each of the N ports and the port setting bit according to the signal frame, and process a signal based on the result bit.

The control unit may generate a port setting bit corresponding to a used port among the N ports as 1, and generate a port setting bit corresponding to an unused port among the N ports as 0.

When the number of ports used among the N ports is U (N>=U, U is a natural number),
the result bit may be 2 to the power of U.

The control unit may process a signal for an unused port among the N ports separately from a signal based on the result bit.

The control unit may separately process each of the unused port regardless of the signal frame and the port setting bit.

The unused port may be in a plurality, and when following the order of ports according to the signal frame, the plurality of unused ports may not be adjacent to each other.

The processing of the signal may be generating of an output signal, and the control unit may generate an output signal bit by performing a bit operation on a logic signal of each of the N ports generated internally and the port setting bit.

The processing of the signal may be obtaining of an input signal, and the control unit may generate an input signal bit by performing a bit operation on a logic signal of each of the N ports obtained from an external device and the port setting bit.

Other aspects, features, and advantages other than those described above will become apparent from the following drawings, claims, and detailed description of the invention.

### ADVANTAGEOUS EFFECTS OF DISCLOSURE

According to embodiments of the present invention, it is possible to implement a signal processing method, device, and computer program capable of processing a large amount of signals even with a limited number of ports by combining a plurality of channels organically without changing a robot control device or using a separate extension module if the number of data transmission/reception channels, which is more than the number of ports included in the robot control device, is required.

In addition, it is possible to implement a signal processing method, device, and computer program that merge and use the logic signals of a plurality of ports in parallel, simultaneously process signals of more than the number of ports, increase the usability of unused ports, and furthermore, enable the port to be used more efficiently.

### BRIEF DESCRIPTION OF DRAWINGS

FIG. 1 schematically illustrates a robot system according to an embodiment of the present invention.
FIG. 2 is an example of a signal frame according to an embodiment of the present invention.
FIG. 3 is a diagram illustrating a method in which a control unit according to an embodiment of the present invention generates a result bit by performing a bit operation on the logic signal of each of N ports and a generated port setting bit according to a signal frame.
FIG. 4 is a flowchart illustrating a signal processing method performed by a robot control device of FIG. 1.

### BEST MODE

A method of processing N or more control signals using N (N is a natural number) ports of a robot control device may include defining an N-bit signal frame composed of a logic signal of each of the N ports; generating a port setting bit for determining whether to use each of the N ports by referring to an order of ports according to the signal frame; generating a result bit by performing a bit operation on a logic signal of each of the N ports and the port setting bit according to the signal frame; and processing a signal based on the result bit.

### MODE OF DISCLOSURE

Various modifications are possible in various embodiments of the present invention and specific embodiments are illustrated in drawings and related detailed descriptions are listed. However, this does not limit various embodiments of the present invention to a specific embodiment and it should be understood that the present invention covers all the modifications, equivalents, and/or replacements within the spirit and scope of the present invention. In the following description of the present invention, when it is determined that the detailed description of the related known technology may obscure the gist of the present invention, the detailed description thereof will be omitted.

In the embodiment below, it will be understood that the terms "first" and "second" are used herein to describe various components but these components should not be limited by these terms. These terms are used only to distinguish one component from other components.

In embodiments below, terms used in this specification are used to describe specific embodiments, and are not intended to limit the scope of the present invention. The terms of a singular form may include plural forms unless otherwise specified. In an embodiment below, the term "include," "comprise," "including," or "comprising," specifies a property, a region, a fixed number, a step, a process, an element and/or a component but does not exclude other properties, regions, fixed numbers, steps, processes, elements and/or components.

Embodiments of the present invention may be represented by functional block configurations and various processing steps. Such functional blocks may be implemented in various numbers of hardware or/and software configurations that perform particular functions. For example, embodiments of the invention may employ integrated circuit configurations such as memory, processing, logic, look-up tables, and the like, which are capable of executing various functions by the control of one or more microprocessors or other control devices. Similarly to the components of an embodiment of the present invention that can be executed by software programming or software elements, embodiments of the present invention include various algorithms implemented in combination of data structures, processes, routines, or other programming configurations, and thus, may be implemented in a programming or scripting language such as C, C++, Java, assembler, or the like. Functional aspects may be implemented in algorithms executed on one or more processors. In addition, embodiments of the present invention may employ the related art for electronic configuration, signal processing, and/or data processing. Terms such as mechanism, element, means, and configuration can be used broadly and are not limited to mechanical and physical configurations. The terms may include the meaning of a series of routines of software in linkage with a processor or the like.

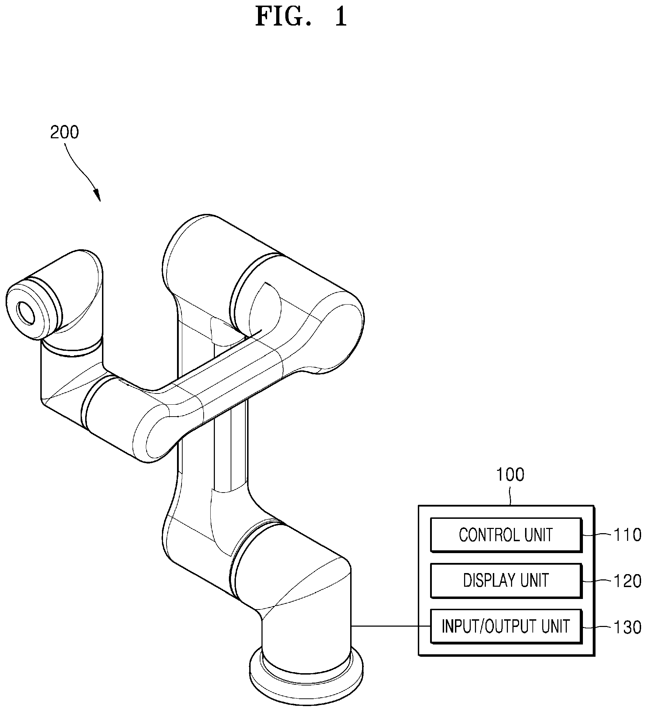

FIG. 1 schematically illustrates a robot system according to an embodiment of the present invention.

Referring to FIG. 1, a robot system according to an embodiment of the present invention may include a robot control device 100 and a robot 200.

In the present invention, the robot 200 may be a device including one or more actuators and one or more parts. In this case, the actuator may refer to various devices for converting electrical energy into kinetic energy based on a control signal. For example, the actuator may be any one of a direct current (DC) servo motor, an alternating current (AC) servo motor, a stepping motor, a linear motor, a hydraulic cylinder, a hydraulic motor, a pneumatic cylinder, and a pneumatic motor. However, this is merely illustrative and the spirit of the present invention is not limited thereto.

Meanwhile, part may refer to a structure for fixing the above-described actuator to a specific position or a structure that is fixed to the actuator to move.

The robot according to an embodiment of the present invention may be any one of an articulated robot, a Scara robot, and a cylindrical robot. An articulated robot may be a robot including one or more joints and parts (or bodies) connecting joints and other joints. A Scara robot may be a robot in which the arm of the robot operates in a specific plane. A cylindrical robot may mean a robot in which an arm of the robot has at least one rotating joint and at least one straight joint. However, this is merely illustrative and the spirit of the present invention is not limited thereto. Therefore, as described above, a device including one or more actuators and one or more parts and operating according to a control signal may correspond to the robot of the present invention.

The robot control device 100 according to an embodiment of the present invention is a device for controlling and/or manipulating a robot, and may include a control unit 110, a display unit 120, and an input/output unit 130.

The control unit 110 according to an embodiment of the present invention may receive a signal for controlling the robot 200 through the input/output unit 130 or output a signal related to the control of the robot 200. In this case, the control unit 110 may include all kinds of devices capable of processing data, such as a processor. Here, the 'processor' may refer to a data processing device embedded in hardware, which has, for example, a circuit physically structured to perform a function represented by codes or instructions included in a program. As an example of the data processing device embedded in the hardware, processing devices such as microprocessors, central processing units (CPUs), processor cores, multiprocessors, application-specific integrated circuits (ASICs), and field programmable gate arrays (FPGAs) may be included, but the scope of the present invention is not limited thereto.

The display unit 120 according to an embodiment of the present invention may display a current operation state of the robot 200. Accordingly, the display unit 120 may refer to a display device that displays a graphic, a text, or an image. For example, the display unit 120 may be composed of any one of a cathode ray tube (CRT), a liquid crystal display (LCD), a plasma display panel (PDP), a light-emitting diode (LED), and an organic light emitting diode (OLED). However, the spirit of the present invention is not limited thereto.

The input/output unit 130 according to an embodiment of the present invention may include a plurality of ports as a means for receiving a signal for controlling the robot 200 or for outputting a signal related to the control of the robot 200. In this case, each port may mean a separate channel (or passage) for transmitting and receiving data between the robot control device 100 and another external device. Each port can transmit and receive data in the form of a logic signal (High (1) or Low (0)).

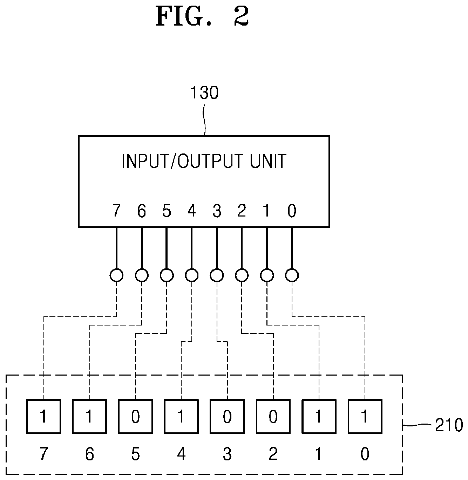

For example, the input/output unit 130 may include eight ports (ports 0 to 7) as shown in FIG. 2, or may include N ports (N is a natural number). If there are eight ports of the input/output unit 130 as shown in FIG. 8, the robot control device 100 may transmit data to an external device through the eight channels or receive data from an external device through the eight channels. In addition, the input/output unit 130 may use four of eight channels to receive data from an external device, and the remaining four channels may be used to transmit data to the external device.

The number of such ports of the input/output unit 130 is generally limited due to the physical size of the robot control device. Therefore, if the number of data transmission and reception channels, which is greater than the number of ports that the input/output unit 130 includes, is required, the robot control device 100 itself was changed to another robot control device (not shown) having more ports, or a separate extension module (not shown) was used in linkage with the robot control device 100.

However, the change of a robot control device or the use of a separate extension module not only increases the operating cost of a system and but also increases the complexity of the system, and causes considerable losses by consuming time for the reorganization of the system.

According to an embodiment of the present invention, if the number of data transmission/reception channels, which is more than the number of ports included in the robot control device, is required, a limited number of ports can process large amounts of signals by combining a plurality of channels organically without changing a robot control device or using a separate extension module. Detailed description for this will be made later.

Meanwhile, the input/output unit 130 according to an embodiment of the present invention may further include various means for obtaining a user input. For example, the input/output unit 130 may include any one of a keyboard, a mouse, a trackball, a microphone, and a button, or a combination of any one or more thereof. In addition, the input/output unit 130 may further include a touch sensing means for performing an input on the display unit 120 described above. However, this is merely illustrative and the spirit of the present invention is not limited thereto.

Although not shown in the drawings, the robot control device 100 according to an embodiment of the present invention may further include a communication unit (not shown) and a memory (not shown).

In this case, the communication unit (not shown) may be a device including hardware and software necessary for the robot control device 100 to transmit and receive a control signal through a wired or wireless connection with an external device such as the robot 200. The communication unit (not shown) may encode or decode a signal according to a communication protocol with another external device through the port of the input/output unit 130 described above.

The memory (not shown) performs a function of temporarily or permanently storing data processed by the robot control device 100. For example, the memory (not shown) may store a signal received from an external device through the input/output unit 130. The signal stored in the memory (not shown) may be used to control the motion of the robot 200. In this case, the memory may include a magnetic storage media or a flash storage media, but the scope of the present invention is not limited thereto.

Meanwhile, the robot control device 100 according to an embodiment of the present invention may be a device provided separately from the robot 200 and/or the control device (not shown) of the robot 200 as shown in the drawings. Also, unlike shown in the drawings, the robot control device 100 may be a device included in the robot 200 and/or a control device (not shown) of the robot 200.

In other words, the robot 200 or a control device (not shown) of the robot 200 may perform a control method of the robot according to an embodiment of the present invention. However, for convenience of description, hereinafter, it is assumed that the robot control device 100 is separately provided as shown in FIG. 1.

Hereinafter, a method of the robot control device 100 to process N or more control signals using N (N is a natural number) ports will be mainly described.

The control unit 110 of the robot control device 100 according to an embodiment of the present invention may define an N-bit signal frame composed of a logic signal of each of the N ports included in the input/output unit 130. In other words, the control unit 110 may define which bit of the N-bit signal is a logic signal of which port.

FIG. 2 is an example of a signal frame 210 according to an embodiment of the present invention.

Hereinafter, for convenience of description, as shown in the drawings, it is assumed and described that the input/output unit 130 includes eight ports (ports 0 to 7). In addition, the signal frame 210 will be described on the premise that the rightmost position is the 0th position and the leftmost position is the seventh position.

Under the premise mentioned above, the control unit 110 may define a logic signal of port 0 to be in the 0th position of the signal frame 210, a logic signal of the port 1 to be in the first position of the signal frame 210, and a logic signal of the port 2 to be in the second position of the signal frame 210. In addition, the control unit 110 may define the logic signals of the third to seventh ports to be at the respective positions of the signal frame 210 by the same logic described above.

In this case, the control unit 110 may determine a position in the signal frame 210 of the logic signal of each port based on a user input. In other words, the user can place the logic signals of the desired ports in the desired order in the signal frame 210 according to its system design. The user's input may be obtained through a graphical user interface (GUI) displayed on the display unit 120 described above.

Of course, the control unit 110 may determine the position in the signal frame 210 of the logic signal of each port according to the order of the port, the serial number of the port, etc., in addition to the user's input. However, this is merely illustrative and the spirit of the present invention is not limited thereto.

Subsequently, the control unit 110 according to an embodiment of the present invention may refer to the order of ports according to the signal frame 210 defined by the above-described process, and generate a port setting bit that determines whether to use each of the N ports.

In the present invention, the 'port setting bit' may mean a bit for determining whether to use a port. In this case, 'whether to use a port' does not mean absolute use or non-use of the port but may mean whether to use the corresponding port according to the method (method for processing N or more control signals using N ports) according to an embodiment of the present invention.

For example, the control unit 110 may set the port setting bit for used port to '1', and set the port setting bit for unused ports to '0'.

Meanwhile, such a port setting bit may not be set consistently for adjacent ports. In other words, when following the order of the ports according to the signal frame, the plurality of unused ports may not be adjacent to each other. That is, the port setting bit may be generated as '1111 0000' or may be set as '1010 1010'.

The control unit 110 according to an embodiment of the present invention may generate a result bit by performing a bit operation on the logic signal of each of the N ports and the generated port setting bit according to the signal frame 210 defined by the above-described process. At this time, the control unit 110 may generate a result bit through a bit operation method for each bit.

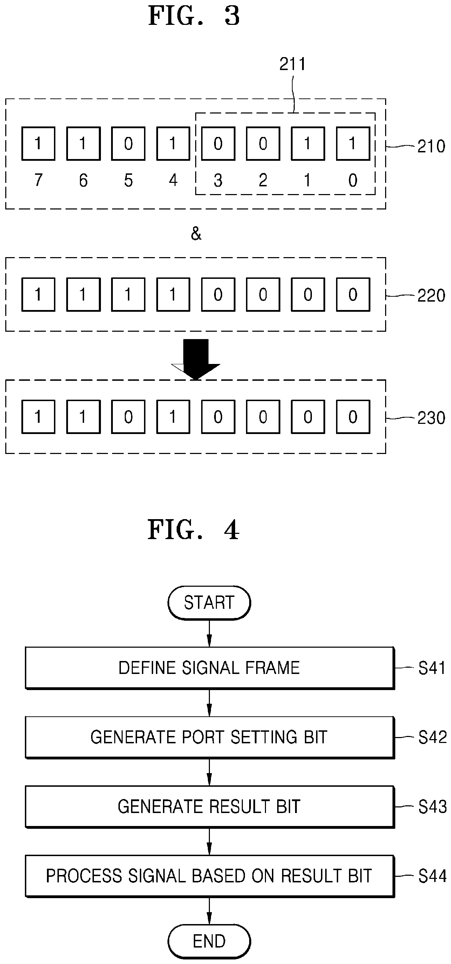

FIG. 3 is a diagram illustrating a method in which a control unit 110 according to an embodiment of the present invention generates a result bit by performing a bit operation on the logic signal of each of N ports and a generated port setting bit according to a signal frame 210.

Referring to FIG. 3, let's assume that a signal of N ports according to the signal frame 210 is '1101 0011' and the generated port setting bit 220 is '1111 0000'.

In this case, the control unit 110 may generate a result bit 230 as '1101 0000' by performing a bit operation for each digit.

When it is assumed that the port setting bit for the used port in FIG. 3 is set to '1' and the port setting bit for the port not used is set to '0', it may mean that ports 0 to 3 are not used. Therefore, the logic signals 211 of ports 0 to 3 are not reflected in the result bit 230. Of course, the term 'unused port' means not to be used according to the method (a method of processing N or more control signals using N ports) according to an embodiment of the present invention as described above, but it does not mean that the port is absolutely unusable.

Meanwhile, the number of bits of the result bit generated by the control unit 110 may increase exponentially as the number of ports used increases. In other words, when the number of ports used among the N ports is U (N>=U, U is a natural number), the result bit may be 2 to the power of U. In the case of FIG. 3, since the number of ports used among the eight ports is four, the number of bits in the result bit may be 2 to the power of 4, that is, 16. Accordingly, the control unit 110 according to an embodiment of the present invention can process more than 16 signals, which are more than four, that is, the number of ports used.

As described above, the present invention can process signals of more than the number of ports by merging and using logic signals of a plurality of ports in parallel.

The control unit 110 according to an embodiment of the present invention may process a signal based on the result bit 230 generated by the above-described process. For example, if the processing of the signal is 'generating the output signal', the control unit 110 may generate an output signal bit by performing a bit operation on the logic signal of each of the N ports, which is generated by an internal operation result, and the port setting bit according to the signal frame.

In addition, if the processing of the signal is 'obtaining the input signal', the control unit 110 may generate an input signal bit by performing a bit operation on the logic signal of each of the N ports, which is obtained from an external device, and the port setting bit according to the signal frame.

On the other hand, the control unit 110 according to an embodiment of the present invention may separately process a signal for an unused port among the N ports. In other words, the control unit 110 may process signals of ports set to a value (e.g., '0') corresponding to a port that the port setting bit does not use among N ports. In this case, the control unit 110 may separately process logic signals of ports not used regardless of the above-described signal frame and port setting bit.

For example, referring to FIG. 3, let's assume that a signal of each of eight ports according to the signal frame 210 is '1101 0011' and the generated port setting bit 220 is '1111 0000'.

In this case, it was described that the control unit 110 may generate a result bit 230 as '1101 0000' by performing a bit operation for each digit.

On the other hand, the control unit 110 may separately process the logic signal of a port (0th port to third port) in which the port setting bit 220 is set to 0000, as '0', '0', '1', and '1'. That is, the logic signal of each of the 0th port to the third port may be processed regardless of the logic signals of the other ports.

Therefore, it is possible to merge and use the logic signals of a plurality of ports in parallel, simultaneously process signals of more than the number of ports, increase the usability of unused ports, and furthermore, enable the port to be used more efficiently.

FIG. 4 is a flowchart illustrating a signal processing method performed by the robot control device 100 of FIG. 1. Hereinafter, detailed descriptions for content overlapping that described with reference to FIGS. 1 to 3 are omitted.

The robot control device 100 according to an embodiment of the present invention may define an N-bit signal frame composed of a logic signal of each of the N ports included in the input/output unit 130 (S41). In other words, the robot control device 100 may define which bit of the N-bit signal is a logic signal of which port.

Hereinafter, for convenience of description, as shown in FIG. 2, it is assumed and described that the input/output unit 130 includes eight ports (ports 0 to 7). In addition, the signal frame 210 will be described on the premise that the rightmost position is the 0th position and the leftmost position is the 7th position.

Under the premise mentioned above, the robot control device 100 may define a logic signal of port 0 to be in the 0th position of the signal frame 210, a logic signal of the port 1 to be in the first position of the signal frame 210, and a logic signal of the port 2 to be in the second position of the signal frame 210. In addition, the robot control device 100 may define the logic signals of the third to seventh ports to be at the respective positions of the signal frame 210 by the same logic described above.

In this case, the robot control device 100 may determine a position in the signal frame 210 of the logic signal of each port based on a user input. In other words, the user can place the logic signals of the desired ports in the desired order in the signal frame 210 according to its system design. The user's input may be obtained through a graphical user interface (GUI) displayed on the display unit 120 described above.

Of course, the robot control device 100 may determine the position in the signal frame 210 of the logic signal of each port according to the order of the port, the serial number of the port, etc., in addition to the user's input. However, this is merely illustrative and the spirit of the present invention is not limited thereto.

Subsequently, the control unit 100 according to an embodiment of the present invention may refer to the order of ports according to the signal frame 210 defined by the above-described process, and generate a port setting bit that determines whether to use each of the N ports (S42).

In the present invention, the 'port setting bit' may mean a bit for determining whether to use a port. In this case, 'whether to use a port' does not mean absolute use or non-use of the port but may mean whether to use the corresponding port according to the method (method for processing N or more control signals using N ports) according to an embodiment of the present invention.

For example, the robot control device 100 may set the port setting bit for used port to '1', and set the port setting bit for unused ports to '0'.

Meanwhile, such a port setting bit may not be set consistently for adjacent ports. In other words, when following the order of the ports according to the signal frame, the plurality of unused ports may not be adjacent to each other. That is, the port setting bit may be generated as '1111 0000' or may be set as '1010 1010'.

The robot control device 100 according to an embodiment of the present invention may generate a result bit by performing a bit operation on the logic signal of each of the N ports and the generated port setting bit according to the signal frame 210 defined by the above-described process (S43).At this time, the robot control device 100 may generate a result bit through a bit operation method for each bit.

Referring to FIG. 3 again, let's assume that a signal of N ports according to the signal frame 210 is '1101 0011' and the generated port setting bit 220 is '1111 0000'.

In this case, the robot control device 100 may generate a result bit 230 as '1101 0000' by performing a bit operation for each digit.

When it is assumed that the port setting bit for the used port in FIG. 3 is set to '1' and the port setting bit for the port not used is set to '0', it may mean that ports 0 to 3 are not used. Therefore, the logic signals 211 of ports 0 to 3 are not reflected in the result bit 230. Of course, the term 'unused port' means not to be used according to the method (a method of processing N or more control signals using N ports) according to an embodiment of the present invention as described above, but it does not mean that the port is absolutely unusable.

Meanwhile, the number of bits of the result bit generated by the robot control device 100 may increase exponentially as the number of ports used increases. In other words, when the number of ports used among the N ports is U (N>=U, U is a natural number), the result bit may be 2 to the power of U. In the case of FIG. 3, since the number of ports used among the eight ports is four, the number of bits in the result bit may be 2 to the power of 4, that is, 16. Accordingly, the robot control device 100 according to an embodiment of the present invention can process more than 16 signals, which are more than four, that is, the number of ports used.

As described above, the present invention can process signals of more than the number of ports by merging and using logic signals of a plurality of ports in parallel.

The robot control device 100 according to an embodiment of the present invention may process a signal based on the result bit 230 generated by the above-described process (S44). For example, if the processing of the signal is 'generating the output signal', the robot control device 100 may generate an output signal bit by performing a bit operation on the logic signal of each of the N ports, which is generated by an internal operation result, and the port setting bit according to the signal frame.

In addition, if the processing of the signal is 'obtaining the input signal', the robot control device 100 may generate an input signal bit by performing a bit operation on the logic signal of each of the N ports, which is obtained from an external device, and the port setting bit according to the signal frame.

On the other hand, the robot control device 100 according to an embodiment of the present invention may separately process a signal for an unused port among the N ports. In other words, the robot control device 100 may process signals of ports set to a value (e.g., '0') corresponding to a port that the port setting bit does not use among N ports. In this case, the robot control device 100 may separately process logic signals of ports not used regardless of the above-described signal frame and port setting bit.

For example, referring to FIG. 3, let's assume that a signal of each of eight ports according to the signal frame 210 is '1101 0011' and the generated port setting bit 220 is '1111 0000'.

In this case, it was described that the robot control device100 may generate a result bit 230 as '1101 0000' by performing a bit operation for each digit.

On the other hand, the robot control device 100 may separately process the logic signal of a port (0th port to third port) in which the port setting bit 220 is set to 0000, as '0', '0', '1', and '1'. That is, the logic signal of each of the 0th port to the third port may be processed regardless of the logic signals of the other ports.

Therefore, it is possible to merge and use the logic signals of a plurality of ports in parallel, simultaneously process signals of more than the number of ports, increase the usability of unused ports, and furthermore, enable the port to be used more efficiently.

The signal processing method according to an embodiment of the present invention can be implemented as computer readable codes on a computer readable recording medium. The computer-readable recording medium is any data storage device that can store data which can thereafter be read by a computer system. Examples of the computer-readable recording medium include ROM, RAM, CD-ROM, magnetic tape, floppy disk, optical data storage, and the like. In addition, the computer-readable recording medium may be distributed over a networked computer system so that code readable by the computer in a distributed fashion may be stored and executed. In addition, functional programs, codes, and code segments for implementing the present invention can be easily inferred by programmers in the art to which the present invention belongs.

Although the present invention has been described with reference to an embodiment shown in the accompanying drawings, this is just an example, and those skilled in the art will understand that various modifications and equivalent other embodiments are possible from this.

## Claims

1. A method of processing N or more control signals using N (N is a natural number) ports of a robot control device, the method comprising:
defining an N-bit signal frame composed of a logic signal of each of the N ports;
generating a port setting bit for determining whether to use each of the N ports by referring to an order of ports according to the signal frame;
generating a result bit by performing a bit operation on a logic signal of each of the N ports and the port setting bit according to the signal frame; and
processing a signal based on the result bit.

2. The signal processing method of claim 1, wherein the generating of the port setting bit comprises
generating a port setting bit corresponding to a used port among the N ports as 1, and
generating a port setting bit corresponding to an unused port among the N ports as 0.

3. The signal processing method of claim 1, wherein when the number of ports used among the N ports is U (N>=U, U is a natural number), the result bit is 2 to the power of U.

4. The signal processing method of claim 1, further comprising, after the processing of the signal, processing a signal for an unused port among the N ports.

5. The signal processing method of claim 4, wherein the processing of the signal for the unused port comprises separately processing each of the unused port regardless of the signal frame and the port setting bit.

6. The signal processing method of claim 4, wherein the unused port is in a plurality, wherein when following the order of ports according to the signal frame, the plurality of unused ports are not adjacent to each other.

7. The signal processing method of claim 1,
wherein the processing of the signal is generating of an output signal,
wherein the generating of the result bit comprises generating an output signal bit by performing a bit operation on a logic signal of each of the N ports generated internally and the port setting bit.

8. The signal processing method of claim 1,
wherein the processing of the signal is obtaining of an input signal,
wherein the generating of the result bit comprises generating an input signal bit by performing a bit operation on a logic signal of each of the N ports obtained from an external device and the port setting bit.

9. A computer program stored on a medium for executing the method of any one of claims 1 to 8 using a computer.

10. A robot control device for processing N or more control signals using N (N is a natural number) ports,
wherein the robot control device comprises a control unit,
wherein the control unit
defines an N-bit signal frame composed of a logic signal of each of the N ports,
generates a port setting bit for determining whether to use each of the N ports by referring to an order of ports according to the signal frame,
generates a result bit by performing a bit operation on a logic signal of each of the N ports and the port setting bit according to the signal frame, and
processes a signal based on the result bit.

11. The robot control device of claim 10,
wherein the control unit
generates a port setting bit corresponding to a used port among the N ports as 1, and
generates a port setting bit corresponding to an unused port among the N ports as 0.

12. The robot control device of claim 10, wherein when the number of ports used among the N ports is U (N>=U, U is a natural number), the result bit is 2 to the power of U.

13. The robot control device of claim 10, wherein the control unit processes a signal for an unused port among the N ports separately from a signal based on the result bit.

14. The robot control device of claim 13, wherein the control unit separately processes each of the unused port regardless of the signal frame and the port setting bit.

15. The robot control device of claim 13,
wherein the unused port is in a plurality,
wherein when following the order of ports according to the signal frame, the plurality of unused ports are not adjacent to each other.

16. The robot control device of claim 10,
wherein the processing of the signal is generating of an output signal,
wherein the control unit generates an output signal bit by performing a bit operation on a logic signal of each of the N ports generated internally and the port setting bit.

17. The robot control device of claim 10,
wherein the processing of the signal is obtaining of an input signal,
wherein the control unit generates an input signal bit by performing a bit operation on a logic signal of each of the N ports obtained from an external device and the port setting bit.
